# EUROPÄISCHE PATENTSCHRIFT

(11) **EP 0 523 761 B1**
(45) Veröffentlichungstag und Bekanntmachung des Hinweises auf die Patenterteilung: **28.12.1994**
(21) Anmeldenummer: 92117895.0
(22) Anmeldetag: 02.03.1989
(51) Int. Cl.: B05D 5/08, C23C 4/18

(54) **Verfahren zum Beschichten von Haushaltgegenständen und Haushaltgegenstand**
Process for coating cooking utensiles and coated utensiles
Procédé pour revêtir des ustensiles de cuisine et ustensiles ainsi revêtus

(30) Priorität: 02.03.1988 DE 3806699
(43) Veröffentlichungstag der Anmeldung: 20.01.1993
(62) Teilanmeldung aus: 89103628.7
(73) Patentinhaber: Scholl, Harald, D-65366 Geisenheim (DE)
(72) Erfinder: Scholl, Harald, D-65366 Geisenheim (DE); Schäfer, Gerold, D-63477 Maintal (DE); Heinzel, Winfried, D-88709 Meersburg (DE)
(74) Vertreter: Witte, Alexander, Dr.-Ing.

(56) Entgegenhaltungen:
- EP-A- 0 123 952
- EP-A- 0 206 121
- FR-A- 1 331 796
- FR-A- 2 032 887
- US-A- 4 311 755
- PATENT ABSTRACTS OF JAPAN, vol. 7, no. 92 (M-208)(1237), 16. April 1983; & JP-A-58 015 742

## Beschreibung

Die Erfindung betrifft ein Verfahren zum Beschichten von Haushaltsgegenständen mit einer Antihaftschicht, bei dem eine Oberfläche des Haushaltsgegenstandes durch Plasmaspritzen mit einer porösen Hartstoffschicht versehen und dann die Hartstoffschicht mit einer Antihaftschicht versehen wird.

Die Erfindung betrifft ferner einen nach dem vorstehend genannten Verfahren hergestellten Haushaltsgegenstand.

Ein Verfahren und ein Haushaltsgegenstand der vorstehend genannten Art sind aus dem Dokument GB-A-944 836 bekannt.

Wenn im Rahmen der vorliegenden Erfindung von "Haushaltsgegenstand" die Rede ist, so soll hierunter jedweder Haushaltsgegenstand verstanden werden, der im Betrieb einer mechanischen Belastung, insbesondere einer Kratz- oder Schnittbelastung ausgesetzt ist. Ein Beispiel hierfür sind Bratpfannen, deren Bratoberfläche beim Wenden oder Zerschneiden des Bratguts einer mechanischen Belastung durch metallische Bratenheber bzw. Bratenwender oder Messer ausgesetzt ist. Entsprechendes gilt für Töpfe, Kasserolen, Backformen, Backbleche und dgl.. Als weitere Beispiele können Bügeleisen genannt werden, deren Sohlen beim Bügeln einer mechanischen Belastung ausgesetzt werden, wenn über Knöpfe, Reißverschlüsse, Nieten und dgl. hinweggebügelt wird. Weitere Haushaltsgegenstände der hier interessierenden Art sind Koch-, Heiz- oder Warmhalteplatten, auf die Töpfe, Pfannen oder Kannen aufgesetzt werden und die daher einer erheblichen Abriebbelastung ausgesetzt sind sowie Auskleidungen von Backöfen oder Grills, an denen sich Fettspritzer ablagern, die nur unter Schwierigkeiten mit agressiven Chemikalien (Backofensprays) oder unter erheblicher mechanischer Belastung entfernt werden können.

Es versteht sich jedoch, daß die vorstehende Aufzählung nicht vollständig ist sondern daß im Rahmen der vorliegenden Erfindung unter "Haushaltsgegenstand" jedweder Art von in Haushalt und Gewerbe verwendeten Gegenständen zu verstehen ist, die in der beispielhaft genannten Weise mechanischen Belastungen ausgesetzt sind.

Aus dem eingangs genannten Dokument GB-A-944 836 ist ein Verfahren zum Beschichten von Bratpfannen beschrieben, bei dem auf die sandgestrahlte metallische Oberfläche der Bratpfanne durch Flammspritzen nacheinander zwei Schichten aufgebracht werden. Die erste Schicht besteht aus Nickel und Chromoxid und wird in drei Durchgängen mit einer Dicke von je 25,4 µm aufgetragen, so daß die erste Schicht insgesamt ca. 76 µm dick ist. Die zweite Schicht besteht aus Aluminiumoxid und wird in vier Durchgängen zu je 25,4 µm Dicke aufgetragen, was eine Gesamtdicke der zweiten Schicht von etwa 100 µm ergibt. Beide Schichten zusammen sind somit etwa 176 µm dick.

Auf diese Oxidschicht wird alsdann eine Schicht aus Polyfluorkohlenstoff mit einer Dicke von etwa 25 µm aufgebracht und diese Schicht wird dann bei etwa 385°C ausgehärtet.

Aus dem Dokument DE-A-36 04 762 bzw. EP-A-0 206 121 ist bekannt, eine Bratfläche einer Bratpfanne oder eine Sohle eines Bügeleisens, d.h. eine im Urzustand metallische Oberfläche zunächst mit einer Haftgrundschicht, beispielsweise einer Nickel-Aluminium-Schicht oder einer Chrom-Nickel-Schicht zu versehen und alsdann auf diese Haftgrundschicht im Plasmasprühverfahren eine keramische Hartstoffschicht aufzubringen, die beispielsweise aus Aluminiumoxid oder aus Aluminiumoxid + Titanoxid oder einem anderen aus der Plasmasprühtechnik bekannten Material besteht.

Bei dem bekannten Verfahren bzw. dem bekannten Haushaltsgegenstand ist die Dicke der Antihaftschicht so gewählt, daß diese Schicht, in mikroskopischer Betrachtungsweise, die Täler zwischen den Spitzen der aufgesprühten Keramikkörner ausfüllt und die Spitzen dieser Körner ebenfalls von einer dünnen Antihaftschicht überdeckt sind. Die makroskopische Härte der so gebildeten Schicht liegt in der Größenordnung der Härte von Korund, d.h. bei ca. 9 Mohs. Dies liegt offensichtlich daran, daß bei Belastung der Oberfläche mit einem metallischen Gegenstand die Spitzen der Hartstoffkörner die Härte der Schicht bestimmen, während hinsichtlich der Antihafteigenschaften die in den Tälern zwischen den Spitzen eingebrachte Antihaftsubstanz die Gleiteigenschaften bestimmt. Praktische Versuche mit Haushaltsgegenständen der vorstehend genannten Art haben gezeigt, daß selbst bei einer Größenordnung von 100.000 Lastspielen mit einer metallischen Schneide und einer Schneidenlast von 5 N die Antihafteigenschaften vollkommen erhalten blieben.

Aus dem Dokument US-A-4 311 755 ist ein aus Stahl bestehender Haushaltsgegenstand bekannt, der mit einer Antihaftbeschichtung versehen ist. Zu diesem Zweck wird der Stahlkörper des Haushaltsgegenstandes zunächst mit einer ersten Lage einer unporösen, keramischen Fritte beschichtet, auf die dann eine zweite Lage einer porösen keramischen Fritte aufgebracht wird. Als Material der Fritte werden beispielsweise Quarz, Feldspat, hydriertes Borax oder dgl. eingesetzt.

Auf die zweite Lage einer porösen, keramischen Fritte wird dann eine dritte Lage eines Fluorkohlenstoff-Primers aufgebracht. Dies geschieht in der Weise, daß der Primer die zweite Lage der porösen, keramischen Fritte überwiegend tränkt, an deren Oberfläche jedoch eine geschlossene Lage aus dem Material des Primers bildet. Schließlich wird auf diese obere geschlossene Lage des Primers eine vierte Schicht eines Fluorkohlenstoff-Überzuges aufgebracht. Auf diese Weise soll die Haftung der vierten Lage mit der zweiten Lage verbessert werden, weil einerseits der Primer der dritten Lage besser in die zweite Lage der porösen, keramischen Fritte eindringt und damit eine Haftung an dieser herstellt und andererseits die Haftung zwischen der dritten und der vierten Lage, die jeweils aus einem Fluorkohlenstoff bestehen besser ist.

Aus dem Dokument US-Buch "Deposition Technologies for Films and Coatings" von Bunshah, et al, Noyes Publications, 1982 ist bekannt, daß die Dichte von plasmagesprühten Schichten dadurch eingestellt werden kann, daß man Beschichtungspulver unterschiedlicher Korngröße verwendet.

In der Praxis hat sich gezeigt, daß nach dem bekannten Verfahren hergestellte Haushaltsgegenstände unter optischen Gesichtspunkten nicht immer befriedigend sind, weil sich insbesondere bei Überhitzung des Haushaltsgegenstandes Flecken in der Oberfläche bilden können, die offenbar darauf zurückzuführen sind, daß sich Fett oder dgl. in der Keramikschicht einlagert.

Der Erfindung liegt daher die Aufgabe zugrunde, ein Verfahren und einen Haushaltsgegenstand der eingangs genannten Art dahingehend weiterzubilden, daß die optische Qualität der Oberfläche erhalten bleibt und gleichzeitig die Belastbarkeit der Schicht noch weiter erhöht wird.

Diese Aufgabe wird erfindungsgemäß gemäß dem eingangs genannten Verfahren dadurch gelöst, daß nach dem Aufbringen der Hartstoffschicht zunächst mit einem dünnflüssigen Einbrennlack auf Harzbasis die Poren der unteren Lagen der Hartstoffschicht bis zu einem ersten Niveau ausgefüllt werden, so daß zumindest die unterste Lage mit dem Einbrennlack ausgefüllt ist, und dann die Poren der oberen Lagen der Hartstoffschicht mit einem Antihaftlack ausgefüllt werden.

Gemäß dem eingangs genannten Haushaltsgegenstand wird die der Erfindung zugrundeliegende Aufgabe ferner dadurch gelöst, daß die Poren der unteren Lagen der Hartstoffschicht bis zu einem ersten Niveau mit einem ausgehärteten Einbrennlack auf Harzbasis ausgefüllt sind, so daß zumindest die unterste Lage mit dem Einbrennlack ausgefüllt ist, während die Poren der oberen Lagen der Hartstoffschicht mit einem ausgehärteten Antihaftlack ausgefüllt sind.

Die der Erfindung zugrundeliegende Aufgabe wird auf diese Weise vollkommen gelöst, weil der dünnflüssige Einbrennlack bis in die Kapillaren des Hartstoffpulvers im Übergang zur metallischen Oberfläche des Haushaltsgegenstandes oder zur Haftgrundschicht eindringen kann. Die keramische Hartstoffschicht wird auf diese Weise bis in ihren Grund hinein vollkommen versiegelt, so daß auch beim Langzeitgebrauch und auch beim Überhitzen des Haushaltsgegenstandes keine Fremdstoffe, insbesondere kein Fett und dgl. mehr in die unteren Bereiche der Hartstoffschicht vordringen kann. Eine Verfärbung der Beschichtung des Haushaltsgegenstandes wird auf diese Weise mit Sicherheit vermieden, so daß auch unter ästhetischen Gesichtspunkten beim Langzeitgebrauch derart beschichteter Haushaltsgegenstände keine Nachteile eintreten.

Bei weiteren besonders bevorzugten Ausgestaltungen der Erfindung wird vor dem Aufbringen der Hartstoffschicht eine Haftgrundschicht als Haftvermittler aufgebracht und zwar bevorzugt in einer Dicke zwischen 1 µm und 20 µm, insbesondere mit einer Dicke von weniger als 10 µm.

Diese Haftgrundschicht wirkt als Haftvermittler und erhöht die Haftung des gesamten Schichtaufbaus auf der Oberfläche des Haushaltsgegenstandes beträchtlich.

Ein Ausführungsbeispiel der Erfindung ist in der Zeichnung dargestellt und wird in der nachfolgenden Beschreibung näher erläutert. Es zeigen:
- Fig. 1: eine Seitenansicht, teilweise aufgebrochen und vergrößert, einer Bratpfanne als Beispiel für einen erfindungsgemäßen Haushaltsgegenstand;
- Fig. 2: eine stark schematisierte Ansicht einer erfindungsgemäßen Anlage zum Beschichten von Haushaltsgegenständen;
- Fig. 3: in stark vergrößertem Maßstab einen Schnitt durch eine erfindungsgemäß aufgebrachte Beschichtung, in vier verschiedenen Stufen des erfindungsgemäßen Verfahrens.

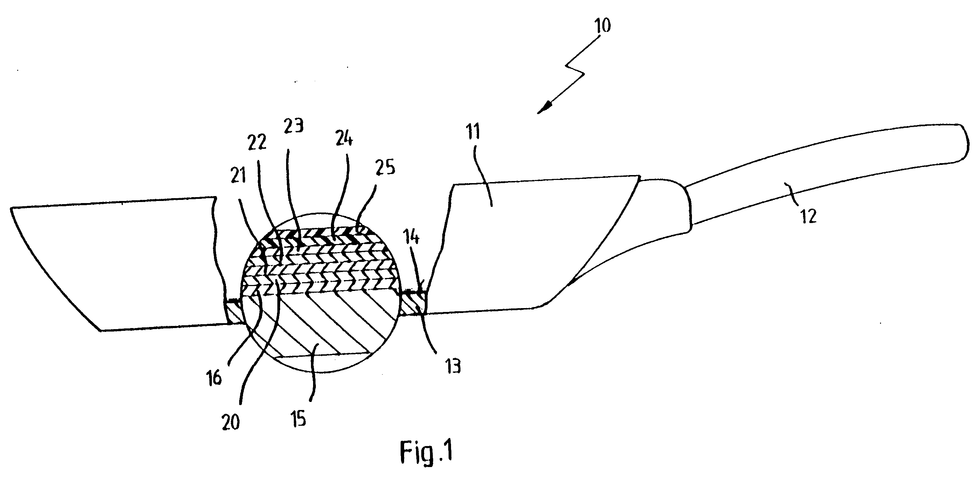

In Fig. 1 bezeichnet 10 insgesamt eine Bratpfanne, die als Beispiel für einen erfindungsgemäßen Haushaltsgegenstand im folgenden erläutert werden soll. Es wurde bereits erwähnt, daß dies nur beispielhaft zu verstehen ist und daß im Rahmen der vorliegenden Erfindung unter "Haushaltsgegenstand" auch Töpfe, Kasserolen, Backformen, Bügeleisen, Herdplatten, Warmhalteplatten, Backofenauskleidungen, Grillauskleidungen und dgl. verstanden werden können.

Die Bratpfanne 10 weist einen Pfannenkörper 11 und einen Stiel 12 auf. Der Pfannenkörper 11 kann aus Metall, beispielsweise Stahl, Gußeisen oder Gußaluminium bestehen, im Rahmen der vorliegenden Erfindung können jedoch auch Haushaltsgegenstände, beispielsweise Pfannenkörper, aus Keramik, Glas und dgl. verwendet werden.

Der Pfannenkörper 11 weist einen ebenen Boden 13 mit einer oberen Oberfläche 14 auf, die beim Beispiel der Bratpfanne 10 die Bratoberfläche ist.

Der Boden 13 besteht, wie man der vergrößerten Ausschnittsdarstellung in Fig. 1 entnehmen kann, aus einem metallischen Grundkörper 15, der zunächst mit einer Haftgrundschicht 16 versehen ist. Die Haftgrundschicht 16 kann eine Nickel-Aluminium-Schicht oder eine Chrom-Nickel-Schicht oder dgl. sein, wie dies aus der Technik der Plasmabeschichtungen für Haftvermittlungsschichten an sich bekannt ist. Die Haftgrundschicht ist vorzugsweise zwischen 2 µm und 20 µm dick, insbesondere dünner als 10 µm.

Auf der Haftgrundschicht 16 befinden sich übereinander vier Lagen 20, 21, 22, 23 einer Hartstoffschicht, insbesondere einer Keramikschicht, die vorzugsweise aus Aluminiumoxid oder einer Mischung aus Aluminiumoxid und Titanoxid bestehen kann.

Die vier Lagen 20 bis 23 der Hartstoffschicht sind mit zwei übereinander angeordneten Lagen 24, 25 einer Antihaftschicht versehen, von denen die obere Lage 25 vorzugsweise auf Polytetrafluoräthylen (PTFE)-Basis hergestellt wurde.

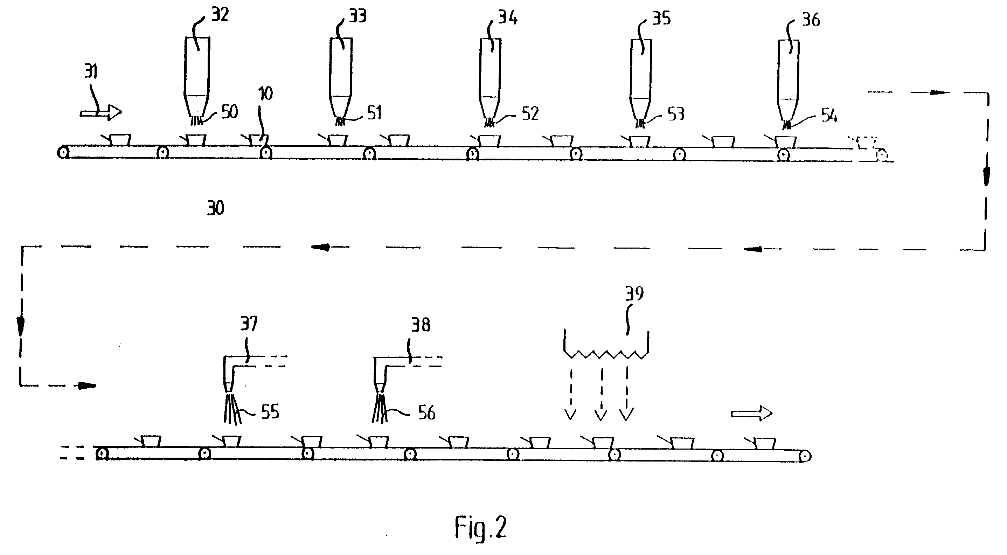

Fig. 2 zeigt in stark schematisierter Weise eine Beschichtungsanlage, bestehend aus einem Förderband 30, auf dem die Bratpfannen 10 in Richtung eines Pfeiles 31 gefördert werden. Die Bratpfannen 10 gelangen auf das Förderband 30 in einen Zustand, in dem der metallische Grundkörper 15 vorzugsweise bereits durch Sandstrahlen aufgerauht und durch geeignete Lösungsmittel oder Wärmebehandlung entfettet wurde. Die Bratpfannen 10 gelangen in diesem Zustand zunächst in den Arbeitsbereich einer ersten Plasma-Beschichtungs-Station 32, und dann in Arbeitsbereiche einer zweiten, dritten, vierten und fünften Plasma-Beschichtungs-Station 33, 34, 35, 36. Von dort laufen die Bratpfannen 10 an einer ersten Belackungsstation 37 und einer zweiten Belackungsstation 38 vorbei, ehe sie in den Bereich einer Heizstation 39 gelangen. Nach dem Durchlaufen der Heizstation 39 werden die Bratpfannen 10 vom Förderband 30 abgenommen.

In der ersten Plasma-Beschichtungs-Station 32 wird die Haftgrundschicht 15 (sofern eine solche vorgesehen ist) aufgebracht. Hierzu wird ein metallisches Pulver 50, beispielsweise eine Nickel-Aluminium-Mischung oder Legierung oder eine Chrom-Nickel-Mischung bzw. Legierung mittels der ersten Plasma-Beschichtungsstation 32 auf die sandgestrahlte und entfettete Oberfläche des metallischen Grundkörpers 15 aufgebracht.

In der zweiten Plasma-Beschichtungs-Station 33 wird ein erstes Hartstoffpulver 51 von verhältnismäßig geringer Korngröße aufgebracht. Die Korngröße liegt vorzugsweise im Bereich zwischen 5 µm und 20 µm. Hierunter versteht man in der Praxis ein Pulver, dessen Korngröße in der Gauß 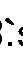 schen Verteilung zwischen 5 µm und 20 µm variiert, wobei in der Praxis ca. 70 % der Pulvermasse eine Korngröße von etwa 12 µm aufweisen. Diese Maße im Rohzustand verändern sich entsprechend, wenn das Hartstoffpulver in den Lichtbogen der zweiten Plasma-Beschichtungsstation 33 gelangt, weil dort das keramische Pulver eine teigige Konsistenz annimmt und in dieser teigigen Konsistenz auf die Haftgrundschicht 16 aufgespritzt wird. Beim Auftreffen auf die Haftgrundschicht 16 verbreitert sich das "Korn", indem es seitlich ausfließt, so daß die Dicke des später wieder erstarrenden Korns in Flugrichtung wesentlich kleiner als in Richtungen senkrecht dazu ist.

In der dritten, vierten und fünften Plasma-Beschichtungsstation 34, 35, 36 werden dann weitere Keramikpulver 52, 53, 54 in entsprechender Weise aufgesprüht, wobei die Korngröße kontinuierlich zunimmt, z.B. von dem erwähnten Bereich zwischen 5 µm und 20 µm zunächst in einen Bereich zwischen 5,6 µm und 22,5 µm mit einem 70 %-Maximum bei 14 µm schließlich bishin zu einer Korngröße zwischen 5,6 µm und 40 µm mit einem 70 %-Maximum bei etwa 20 µm Korngröße.

Es versteht sich, daß diese Korngrößen-Maßangaben nur illustrierend zu verstehen sind und daß selbstverständlich Abweichungen nach oben und unten möglich sind, ohne den Rahmen der vorliegenden Erfindung zu verlassen.

Während die Haftgrundschicht nur verhältnismäßig dünn mit einer Dicke von vorzugsweise unter 10 µm aufgebracht wird, können die Hartstoffschichten mittels der Beschichtungsstationen 33 bis 36 nahezu gleich dick aufgebracht werden und zwar jeweils vorzugsweise 15 µm dick, so daß die gesamte Hartstoffschicht eine Dicke von 60 µm aufweist. Auch hier sind selbstverständlich Variationen möglich, ohne daß dies den Rahmen der vorliegenden Erfindung verläßt.

Die in dieser Weise aufgebrachte und beispielsweise 60 µm dicke Hartstoffschicht ist ein poröses Gebilde, an dessen Oberfläche die dicksten Körner mit der weiter oben geschilderten Verbreiterung in seitlicher Richtung anzutreffen sind.

In der ersten Belackungsstation 37 wird nun ein erster Lack 55 auf die poröse Keramikschicht aufgebracht. Der erste Lack 55 ist ein extrem dünnflüssiger Einbrennlack auf Harzbasis, wie er z.B. mit der Bezeichnung CENO-THERM Basislack unter der Typennummer 071230-702533 von der Weilburger Lackfabrik J. Grebe GmbH, D-6290 Weilburg, erhältlich ist. Im Bedarfsfalle kann der erste Lack 55 durch geeignete Lösungsmittel noch weiter verdünnt werden.

Bevor der erste Lack 55 getrocknet ist, wird ein zweiter Lack 56 im Naß-In-Naß-Verfahren auf den ersten Lack 55 mittels der zweiten Belackungsstation 38 aufgetragen. Der zweite Lack 56 ist ein Polytetrafluorethylen-Lack, wie er z.B. mit der Bezeichnung GREBLON-Antihaftbeschichtung 12/31 unter der Typennummer 071230-702534 von der Weilburger Lackfabrik erhältlich ist, und der ebenfalls durch geeignete Lösungsmittel verdünnt werden kann.

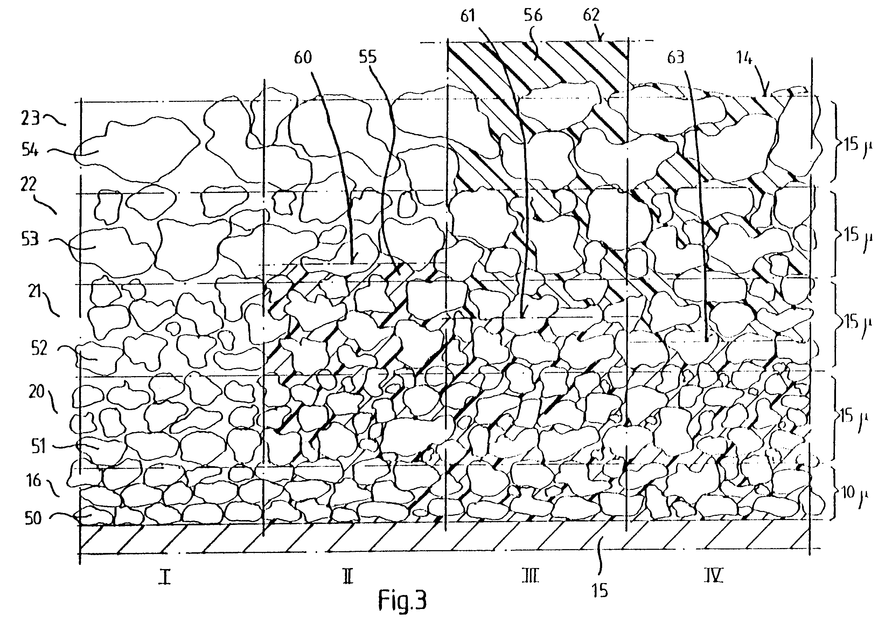

Fig. 3 zeigt den Schichtenaufbau in starker Vergrößerung, wie er sich in verschiedenen Stadien des aus Fig. 2 ersichtlichen Beschichtungsprozesses darstellt.

Bei der in Fig. 3 erkennbaren Phase I sind die vier Lagen 20 bis 23 der Hartstoffschicht mit den Pulvern 51 bis 54 zunehmender Korngröße bereits auf die Haftgrundschicht 16 aufgebracht. Die Bratpfannen 10 befinden sich somit in der Darstellung der Fig. 2 bereits hinter der fünften Plasma-Beschichtungs-Station 36.

Phase II zeigt den Zustand nach Passieren der ersten Belackungsstation 37. Man erkennt, daß die Zwischenräume zwischen den Körnern der Hartstoff-Pulver 51, 52 und 53 (letztere teilweise) mit dem sehr dünnflüssigen Einbrennlack 55 bis zu einem ersten Niveau 60 ausgefüllt sind. Der dünnflüssige Einbrennlack 55 ist selbst bis in die sehr schmalen Kapillaren zwischen dem feinen ersten Hartstoffpulver 50 eingedrungen und noch darunter bis in die Haftgrundschicht 16 hinein.

Infolge der sehr flüchtigen Lösungsmittel des Einbrennlacks 55 und infolge der Umgebungstemperatur im Bereich des Förderbandes 30, die durchaus einen Wert von 80°C und darüber erreichen kann, ist der Einbrennlack 55 bei Erreichen der zweiten Belackungsstation 38 bereits auf ein zweites Niveau 61 innerhalb der zweiten Hartstoffschicht 21 oder sogar darunter abgesunken. Das Absinken des Spiegels des Einbrennlacks 55 vom ersten Niveau 60 auf das zweite Niveau 61 wird auch dadurch gefördert, daß der Einbrennlack 55 noch in die kleinsten Kapillaren einsickert, während sich die Bratpfanne 10 von der ersten Belackungsstation 37 zur zweiten Belackungsstation 38 auf dem Förderband 30 bewegt, weil der Einbrennlack 55 sich erwärmt und dabei noch dünnflüssiger wird.

Phase III zeigt nun den Zustand unmittelbar nach dem Passieren der zweiten Belackungsstation 38 und man erkennt, daß der Antihaftlack auf die drei Lagen 21, 22 und 23 der Hartstoffschicht aufgebracht wurde und sich oberhalb des Einbrennlacks 55 befindet. Da auch der Antihaftlack 56 mit einem flüchtigen Lösungsmittel verdünnt wurde und infolge der relativ hohen Umgebungstemperatur wird der Antihaftlack 56 bevorzugt in einer solchen Menge aufgebracht, daß sein Spiegel auf einem dritten Niveau 62 oberhalb der obersten Hartstoffschicht 23 liegt.

Phase IV zeigt schließlich den Zustand nach dem Passieren der Heizstation 39. Infolge der dort herrschenden Prozesstemperatur, die zwischen 320°C und 450°C, vorzugsweise zwischen 400°C und 420°C eingestellt wird, hat sich sowohl der Einbrennlack 55 auf ein viertes Niveau 63 unterhalb des zweiten Niveaus 61 tief in die Kapillaren der unteren Lagen 16, 20 und 21 zurückgezogen wie auch den Antihaftlack 56 beim Zusammenziehen weiter nach unten in das kapillare Gefüge hereingezogen. Durch geeignete Dimensionierung der aufgebrachten Mengen der Lacke 55 und 56 und durch entsprechendes Einstellen der Einbrenntemperatur in der Heizstation 37 im Zusammenhang mit der Durchlaufgeschwindigkeit der Bratpfannen 10 bildet sich eine Oberfläche 14 der eingangs genannten Art aus, bei der die obersten Körner an der Oberfläche der vierten Hartstoffschichtlage 23 nur noch von einer relativ dünnen Antihaftschicht von einigen µm, beispielsweise 5 µm Dicke überzogen sind, während sich die dazwischenliegenden Täler mit Antihaftsubstanz gefüllt haben.

Andererseits sind alle kapillaren Bereiche der porösen Struktur vollständig durch den Einbrennlack 55 bzw. den Antihaftlack 56 ausgefüllt, so daß Fremdstoffe, beispielsweise flüssiges Fett nicht bis in das kapillare Gefüge der Schichten 16, 20 bis 23 gelangen können.

## Patentansprüche

1. Verfahren zum Beschichten von Haushaltsgegenständen mit einer Antihaftschicht, bei dem eine Oberfläche des Haushaltsgegenstandes durch Plasmaspritzen mit einer porösen Hartstoffschicht (20, 21, 22, 23) versehen und dann die Hartstoffschicht (20, 21, 22, 23) mit einer Antihaftschicht (24, 25) versehen wird, dadurch gekennzeichnet, daß nach dem Aufbringen der Hartstoffschicht (20, 21, 22, 23) zunächst mit einem dünnflüssigen Einbrennlack (55) auf Harzbasis die Poren der unteren Lagen (20, 21, 22) der Hartstoffschicht bis zu einem ersten Niveau (60) ausgefüllt werden, so daß zumindest die unterste Lage (20) mit dem Einbrennlack (55) ausgefüllt ist, und dann die Poren der oberen Lagen (21, 22, 23) der Hartstoffschicht mit einem Antihaftlack (56) ausgefüllt werden.

2. Verfahren nach Anspruch 1, dadurch gekennzeichnet, daß der Antihaftlack ein Lack auf Polytetrafluoräthylen-Basis ist.

3. Verfahren nach Anspruch 1 oder 2, dadurch gekennzeichnet, daß vor dem Aufbringen der Hartstoffschicht (20, 21, 22, 23) eine Haftgrundschicht (16) aufgebracht wird.

4. Verfahren nach Anspruch 3, dadurch gekennzeichnet, daß die Haftgrundschicht mit einer Dicke zwischen 1 µm und 20 µm, vorzugsweise von weniger als 10 µm aufgebracht wird.

5. Haushaltsgegenstand mit einer Antihaftschicht, bei dem eine Oberfläche des Haushaltsgegenstandes mit einer aus Hartstoffpulver (50 - 54) bestehenden porösen Hartstoffschicht (20 - 23) versehen ist und auf die Hartstoffschicht (20 - 23) eine Antihaftschicht (24, 25) aufgebracht ist, dadurch gekennzeichnet, daß die Poren der unteren Lagen (20, 21, 22) der Hartstoffschicht bis zu einem ersten Niveau (60) mit einem ausgehärteten Einbrennlack (55) auf Harzbasis ausgefüllt sind, so daß zumindest die unterste Lage (20) mit dem Einbrennlack (55) ausgefüllt ist, während die Poren der oberen Lagen (21, 22, 23) der Hartstoffschicht mit einem ausgehärteten Antihaftlack (56) ausgefüllt sind.

## Claims

1. Process for coating household objects with a nonstick layer in the case of which a surface of the household object is provided by plasma spraying with a porous hard material layer (20, 21, 22, 23) and the hard material layer (20, 21, 22, 23) is then provided with a nonstick layer (24, 25), characterized in that when the hard material layer (20, 21, 22, 23) has been applied the pores in the lower layers (20, 21, 22) of the hard material layer are firstly filled to a first level (60) with a highly fluid resin-based baking enamel (55) such that at least the lowermost layer (20) is filled with the baking enamel (55) and then the pores in the upper layers (21, 22, 23) of the hard material layer are filled with a nonstick enamel (56).

2. Process according to Claim 1, characterized in that the nonstick enamel is a polytetrafluoroethylene-based enamel.

3. Process according to Claim 1 or 2, characterized in that an adhesive base layer (16) is applied before the hard material layer (20, 21, 22, 23) is applied.

4. Process according to Claim 3, characterized in that the adhesive base layer is applied with a thickness of between 1 µm and 20 µm, preferably of less than 10 µm.

5. Household object having a nonstick layer in the case of which a surface of the household object is provided with a porous hard material layer (20 - 23) consisting of hard material powder (50 - 54) and a nonstick layer (24, 25) is applied to the hard material layer (20 - 23), characterized in that the pores in the lower layers (20, 21, 22) of the hard material layer are filled to a first level (60) with a hardened resin-based baking enamel (55) such that at least the lowermost layer (20) is filled with the baking enamel (55) whilst the pores in the upper layers (21, 22, 23) of the hard material layer are filled with a hardened nonstick enamel (56).

## Revendications

1. Procédé pour revêtir des ustensiles de cuisine avec un revêtement anti-adhésif, selon lequel une face de l'ustensile de cuisine est pourvue, par projection au plasma, d'un revêtement (20, 21, 22, 23) poreux à résistance mécanique élevée, ledit revêtement (20, 21, 22, 23) à résistance mécanique élevée étant ensuite lui-même pourvu d'un revêtement anti-adhésif (24, 25), caractérisé en ce que, après application du revêtement (20, 21, 22, 23) à résistance mécanique élevée, ce sont d'abord les pores des couches inférieures (20, 21, 22) dudit revêtement à résistance mécanique élevée qui sont bouchés jusqu'à un premier niveau (60), au moyen d'une laque thermodurcissable (55) fluide, à base de résine, de telle sorte qu'au moins la couche la plus inférieure (20) soit enduite avec la laque thermodurcissable (55), les pores des couches supérieures (21, 22, 23) du revêtement à résistance mécanique élevée étant ensuite bouchés avec une laque anti-adhésive (56).

2. Procédé selon la revendication 1, caractérisé en ce que la laque anti-adhésive est une laque à base de polytétrafluoréthylène.

3. Procédé selon la revendication 1 ou 2, caractérisé en ce que, avant d'appliquer le revêtement (20, 21, 22, 23) à résistance mécanique élevée, on applique une couche passivante à phosphate (16).

4. Procédé selon la revendication 3, caractérisé en ce que la couche passivante à phosphate est appliquée sur une épaisseur comprise entre 1 µm et 20 µm, et de préférence de moins de 10 µm.

5. Ustensile de cuisine avec revêtement antiadhésif, dans lequel une face dudit ustensile est pourvue d'un revêtement (20 - 23) poreux à résistance mécanique élevée, constitué de poudre (50 - 54) d'un matériau présentant une résistance mécanique élevée, un revêtement anti-adhésif (24, 25) étant appliqué sur ledit revêtement (20 - 23) à résistance mécanique élevée, caractérisé en ce que les pores des couches inférieures (20, 21, 22) du revêtement à résistance mécanique élevée sont bouchés jusqu'à un premier niveau (60) au moyen d'une laque thermodurcissable (55) durcie, à base de résine, de telle sorte qu'au moins la couche la plus inférieure (20) soit enduite avec la laque thermodurcissable (55), tandis que les pores des couches supérieures (21, 22, 23) du revêtement à résistance mécanique élevée sont bouchés avec une laque anti-adhésive (56) durcie.
